# EUROPEAN PATENT APPLICATION

(11) **EP 2 865 581 A2**
(43) Date of publication of application: **29.04.2015**
(21) Application number: 14189917.9
(22) Date of filing: 22.10.2014
(51) Int. Cl.: B62D 25/08

(54) **Suspension tower structure**

(30) Priority: 28.10.2013 JP 2013223748
(71) Applicant: Toyota Jidosha Kabushiki Kaisha, Toyota-shi, Aichi-ken 471-8571 (JP)
(72) Inventor: Kawakami, Hirofumi, Aichi-ken,, 471-8571 (JP)
(74) Representative: Kuhnen & Wacker

(57) **Abstract**

A suspension tower structure comprising a suspension tower main body provided at an outer side in a vehicle transverse direction of a vehicle front portion, a front side upper arm mounting portion that is a portion of the suspension tower main body, and to which is mounted a front side end portion in a vehicle longitudinal direction of an upper arm that structures a portion of a suspension; a rear side upper arm mounting portion that is a portion of the suspension tower main body, and to which is mounted a rear side end portion in the vehicle longitudinal direction of the upper arm; and a reinforcing portion that overlaps at least one of the front side or the rear side upper arm mounting portion as seen in a vehicle front view, and that is provided between the front side and the rear side upper arm mounting portions.

## Description

### Background of the Invention

### Technical Field

The present invention relates to a suspension tower structure.

### Related Art

As a suspension tower structure, there is, for example, the structure disclosed in Japanese Patent Application Laid-Open (JP-A) No. 2009-35106.

An upper arm of a suspension is mounted, so as to be able to swing freely, to a suspension tower via rubber bushes and shaft bodies at a pair mounting portions at a vehicle body side of the upper arm. The shaft bodies are supported by a front side rib, that is formed so as to project-out toward the vehicle transverse direction outer side from an inner side wall in the vehicle transverse direction of the suspension tower, and by the front wall in the vehicle longitudinal direction of the suspension tower, or are supported by a rear side rib, that is formed so as to project-out toward the vehicle transverse direction outer side from the inner side wall in the vehicle transverse direction of the suspension tower, and by the rear wall in the vehicle longitudinal direction of the suspension tower.

When lateral force is inputted from the upper arm to the suspension tower at the time when the vehicle travels, there is the concern that the front side rib and the rear side rib that support the shaft bodies, or the side wall at which the front side rib and the rear side rib are formed, will deform due to this input.

Further, due to input of lateral force from the upper arm, rotation moments are applied to the suspension tower substantially in the longitudinal direction as seen in a vehicle plan view and substantially in the vertical direction as seen in a vehicle front view.

There is room for improvement of a suspension tower with respect to such concern of deformation and application of a rotation moment.

Note that JP-A No. 2009-35059 discloses a structure that mounts a reinforcing patch that extends from the front wall along the top wall to the rear wall of a suspension tower. Even if a reinforcing patch is provided at the suspension tower in this way, there is a uniform distance between the force input position (shaft body) from the upper arm at the suspension tower and the reinforcing patch (e.g., the portion mounted to the top wall), and a rotation moment corresponding to this distance is applied to the suspension tower.

In consideration of the above-described circumstances, an object of the present invention is to improve the rigidity of upper arm mounting portions at a suspension tower.

### Summary

A suspension tower structure of a first aspect of the present invention has: a suspension tower main body that is provided at an outer side in a vehicle transverse direction of a vehicle front portion; a front side upper arm mounting portion that is a portion of the suspension tower main body, and to which is mounted a front side end portion in a vehicle longitudinal direction of an upper arm that structures a portion of a suspension; a rear side upper arm mounting portion that is a portion of the suspension tower main body, and to which is mounted a rear side end portion in the vehicle longitudinal direction of the upper arm; and a reinforcing portion that, within the suspension tower main body, overlaps at least one of the front side upper arm mounting portion or the rear side upper arm mounting portion as seen in a vehicle front view, and that is provided between the front side upper arm mounting portion and the rear side upper arm mounting portion.

In the suspension tower structure of the first aspect, at the suspension tower main body, the reinforcing portion is provided between the front side upper arm mounting portion and the rear side upper arm mounting portion, and therefore, the rigidity of the upper arm mounting portions improves. Accordingly, in a case in which lateral force is inputted from the upper arm to the suspension tower main body, deformation of the front side upper arm mounting portion and the rear side upper arm mounting portion, and the suspension tower main body at which the upper arm mounting portions are formed, can be suppressed.

Further, due to lateral force being inputted from the front side upper arm mounting portion and the rear side upper arm mounting portion to the suspension tower main body, a rotation moment is applied to the suspension tower main body as seen in a vehicle front view and a vehicle plan view. However, the reinforcing member is provided between the upper arm mounting portions so as to overlap, as seen in a vehicle front view, at least one of the front side upper arm mounting portion or the rear side upper arm mounting portion that are points of input of force from the upper arm. Therefore, deformation of the suspension tower main body due to application of a rotation moment can be suppressed.

In a suspension tower structure of a second aspect of the present invention, in the first aspect, the reinforcing portion is formed integrally with the suspension tower main body.

In the suspension tower structure of the second aspect, the reinforcing portion is formed integrally with the suspension tower main body. Therefore, the rigidity of the front side upper arm mounting portion and the rear side upper arm mounting portion that are reinforced by the reinforcing portion improves more.

Accordingly, deformation of the front side upper arm mounting portion, the rear side upper arm mounting portion, and the suspension tower main body due to input of lateral force from the upper arm, and deformation of the suspension tower main body due to a rotation moment in a vehicle front view and a vehicle plan view, that is generated at the suspension tower main body due to the input from the upper arm, can be suppressed more.

In a suspension tower structure of a third aspect of the present invention, in the first aspect or the second aspect, the reinforcing portion is formed from a front side reinforcing portion that reinforces the front side upper arm mounting portion, and a rear side reinforcing portion that reinforces the rear side upper arm mounting portion.

In the suspension tower structure of the third aspect, the front side reinforcing portion and the rear side reinforcing portion, that reinforce the front side upper arm mounting portion and the rear side upper arm mounting portion respectively, are provided. Therefore, each of the upper arm mounting portions can be reinforced respectively. Accordingly, the rigidity of the front side upper arm mounting portion and the rear side upper arm mounting portion can be improved efficiently.

Accordingly, deformation of the front side upper arm mounting portion, the rear side upper arm mounting portion, and the suspension tower main body due to input of lateral force from the upper arm, and deformation of the suspension tower main body due to a rotation moment in a vehicle front view and a vehicle plan view, that is generated at the suspension tower main body due to the input from the upper arm, can be suppressed.

In a suspension tower structure of a fourth aspect of the present invention, in the inventions of the first through third aspects, the reinforcing portion is formed by a plate body.

In the suspension tower structure of the fourth aspect, the reinforcing portion is formed by a plate body. Accordingly, lightening of the weight of the reinforcing portion and the suspension tower main body can be devised.

In a suspension tower structure of a fifth aspect of the present invention, in the second aspect, the reinforcing portion is a beam-shaped body that is formed integrally and continuously from the front side upper arm mounting portion to the rear side upper arm mounting portion.

In the suspension tower structure of the fifth aspect, the reinforcing portion is formed as a beam-shaped body that is continuous from the front side upper arm mounting portion via the reinforcing portion to the rear side upper arm mounting portion. Therefore, the rigidity of the front side upper arm mounting portion, the rear side upper arm mounting portion, and the suspension tower main body is even higher. Accordingly, deformation of the front side upper arm mounting portion, the rear side upper arm mounting portion, and the suspension tower main body due to input of lateral force from the upper arm is suppressed more. Moreover, deformation of the suspension tower main body that is due to rotation moments in a vehicle front view and a vehicle plan view, that are generated at the suspension tower main body due to the input from the upper arm, can be suppressed more.

In a suspension tower structure of a sixth aspect of the present invention, in the suspension tower structures of the first aspect through the fifth aspect, further has a first reinforcing member, that connects a rear wall of the suspension tower main body with a skeleton member that is positioned further toward a vehicle longitudinal direction rear side from the suspension tower main body.

In the suspension tower structure of the sixth aspect, the rear wall at the vehicle longitudinal direction rear side of the suspension tower main body and a skeleton member that is positioned further toward the vehicle longitudinal direction rear side from the suspension tower main body are connected by the first reinforcing member. As a result, the rigidity of the suspension tower main body improves. Accordingly, even if a rotation moment as seen in a vehicle plan view is applied to the suspension tower main body due to the input of lateral force from the upper arm, the rear wall of the suspension tower main body is supported by the first reinforcing member that is connected to the skeleton member, and therefore, deformation of the suspension tower main body is suppressed.

In a suspension tower structure of a seventh aspect of the present invention, in the suspension tower structures of the first aspect through the sixth aspect, further has a second reinforcing member, that connects a front wall of the suspension tower main body with a skeleton member that is positioned further toward a vehicle longitudinal direction front side from the suspension tower main body.

In the suspension tower structure of the seventh aspect, the front wall at the vehicle longitudinal direction front side of the suspension tower main body and a skeleton member that is positioned further toward the vehicle longitudinal direction front side from the suspension tower main body are connected by the second reinforcing member. As a result, the rigidity of the suspension tower main body improves. Accordingly, even if a rotation moment as seen in a vehicle plan view is applied to the suspension tower main body due to the input of lateral force from the upper arm, the front wall of the suspension tower main body is supported by the second reinforcing member that is connected to the skeleton member, and therefore, deformation of the suspension tower main body is suppressed.

In a suspension tower structure of an eighth aspect of the present invention, in the suspension tower structures of the first aspect through the seventh aspect, the suspension tower main body has a top wall, a front wall that is positioned at front side in the vehicle longitudinal direction, a side wall that is positioned at inner side in the vehicle transverse direction, and a rear wall that is positioned at rear side in the vehicle longitudinal direction, and a part of the reinforcing portion contacts the side wall and the top wall of the suspension tower main body.

In the suspension tower structure of the eighth aspect, the part of the reinforcing portion contacts the side wall and the top wall of the suspension tower main body. Therefore, the rigidity of the reinforcing portion can be improved and the rigidity of the front side upper arm mounting portion and the rear side upper arm mounting portion that are reinforced by the reinforcing portion improves even more.

Since the present invention has the above-described structure, the rigidity of the upper arm mounting portions of a suspension tower main body can be improved.

### Brief Description of the Drawings

Embodiments of the present invention will be described in detail based on the following figures, wherein:
Fig. 1 is a perspective view showing a vehicle front portion structure that includes a suspension tower structure relating to a first embodiment of the present invention;
Fig. 2 is a cross-sectional view showing main portions of the suspension tower structure relating to the first embodiment of the present invention;
Fig. 3A is a side view of a suspension tower structure relating to a second embodiment of the present invention;
Fig. 3B is a perspective view of the suspension tower structure relating to the second embodiment of the present invention;
Fig. 4A is a bottom view of a suspension tower structure relating to a third embodiment of the present invention;
Fig. 4B is a perspective view of the suspension tower structure relating to the third embodiment of the present invention;
Fig. 5A is a perspective view of a suspension tower structure of a fourth embodiment of the present invention;
Fig. 5B is a schematic drawing showing main portions of the suspension tower structure of the fourth embodiment of the present invention;
Fig. 6A is a perspective view of a suspension tower structure of a fifth embodiment of the present invention;
Fig. 6B is a schematic drawing showing main portions of the suspension tower structure of the fifth embodiment of the present invention; and
Fig. 7 is a drawing for explaining operation of the present invention.

### Detailed Description of the Invention

### [First Embodiment]

A suspension tower structure relating to a first embodiment of the present invention is described.

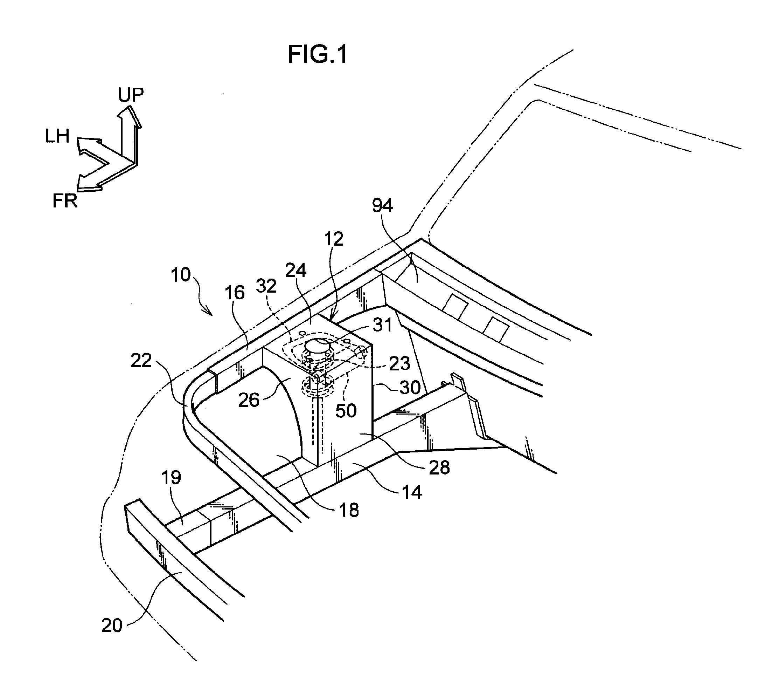

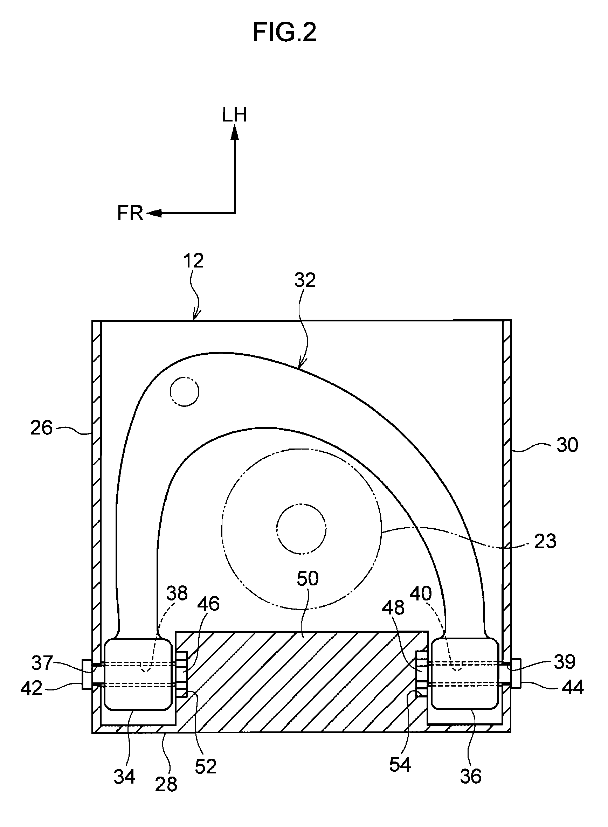

A perspective view of a vehicle front portion structure that includes the suspension tower structure relating to the present embodiment is shown in Fig. 1, and a lateral sectional view of the suspension tower structure is shown in Fig. 2. Hereinafter, in the respective drawings, the vehicle transverse direction outer side is indicated by arrow LH, the vehicle upper side is indicated by arrow UP, and the vehicle front side is indicated by arrow FR.

As shown in Fig. 1, a suspension tower structure 10 is a structure that supports a double-wishbone-type suspension device for a vehicle for example, and is disposed at the front outer side portion of the vehicle.

Note that the suspension tower structure at the vehicle right side is shown in Fig. 1, and, because the suspension tower structure at the left side has left/right symmetry thereto, description of the suspension tower structure at the left side is omitted.

First, the vehicle front portion structure at which the suspension tower structure 10 of an automobile is formed is described with reference to Fig. 1. Then, the suspension tower structure 10 that is the main portion is described.

As shown in Fig. 1, a suspension tower 12 of an automobile has a front side member 14 that is a skeleton member that extends in the vehicle longitudinal direction, an apron upper member 16 that is positioned at the vehicle transverse direction outer side and the vehicle vertical direction upper side of the front side member 14 and extends in the vehicle longitudinal direction, and an apron panel 18 that, in a vehicle transverse direction cross-section, extends obliquely downward from the apron upper member 16 toward the front side member 14.

A bumper reinforcement 20 that extends in the vehicle transverse direction is mounted via a crash box 19 to a front side end portion in the vehicle longitudinal direction of the front side member 14. Further, a radiator support upper member 22 that extends in the vehicle transverse direction is mounted to a front side end portion in the vehicle longitudinal direction of the apron upper member 16.

The suspension tower 12 houses an upper arm 32 and a shock absorber 23 and the like that are described later, and is formed as a substantially rectangular body that projects-out from the apron panel 18 toward the vehicle vertical direction upper side.

Concretely, the suspension tower 12 has a top wall 24 to which the upper end of the shock absorber and the like are anchored, a front wall 26 that is positioned at the vehicle longitudinal direction front side, a side wall 28 that is positioned at the vehicle transverse direction inner side, and a rear wall 30 that is positioned at the vehicle longitudinal direction rear side. A hole portion 31 for shock absorber mounting is formed in the top wall 24.

The suspension mechanism that is incorporated within the suspension tower 12 is a double-wishbone type, and has the upper arm 32 that is formed in a substantial U-shape in order to avoid interference with the coil spring and the like of the shock absorber 23. As shown in Fig. 2, rubber bushes 34, 36 are mounted to the both distal end portions of the U-shape of the upper arm 32.

The rubber bush 34 is shaft-supported at the suspension tower 12 due to a bolt 42 being inserted-through an inner tube 38 of the rubber bush 34 from a hole portion 37 of the front wall 26 of the suspension tower 12, and being screwed-together with a weld nut 46 provided at a convex portion 50 that is described later. The rubber bush 36 is similarly shaft-supported at the suspension tower 12. Due thereto, the upper arm 32 is supported so as to swing freely with respect to the suspension tower 12.

Note that there are cases in which the bolt 42 is called "shaft body 42" or "first shaft body 42", and a bolt 44 is called "shaft body 44" or "second shaft body 44".

The convex portion 50, that is a beam-shaped body having a rectangular cross-section and is continuous from a position (a front side upper arm mounting portion) that supports the shaft body 42 to a position (a rear side upper arm mounting portion) that supports the shaft body 44, is formed at the corner portion that is formed by the side wall 28 and the top wall 24 at the suspension tower 12. Note that two sides that form the cross-sectional rectangular shape of the convex portion 50 contact the side wall 28 and the top wall 24, respectively. This convex portion 50 is formed integrally with the suspension tower 12 by casting.

Note that the convex portion 50 corresponds to the portion at which a portion of the front side upper arm mounting portion, a reinforcing portion, and a portion of the rear side upper arm mounting portion of the present invention are formed integrally.

Note that the front side upper arm mounting portion is constituted with the cross-sectionally rectangular portion at the vehicle longitudinal direction front end portion of the convex portion 50, the shaft body 42, and the portion of the front wall 26 that overlaps the front end portion at the vehicle longitudinal direction of the convex portion 50 as seen in a vehicle front view. Similarly, the rear side upper arm mounting portion is constituted with the portion at the vehicle longitudinal direction rear end portion of the convex portion 50, the shaft body 44, and the portion of the rear wall 30 that overlaps the rear end portion at the vehicle longitudinal direction of the convex portion 50 as seen in a vehicle front view

Further, recesses 52, 54 for providing the weld nuts 46, 48 are formed at both end portions in the vehicle longitudinal direction of the convex portion 50.

Operation of the suspension tower structure 10 of the first embodiment that is structured in this way is described.

The convex portion 50 is a beam-shaped body that is formed continuously from one end side of the rubber bush 34 to one end side of the rubber bush 36. The end sides of the rubber bushes 34 and 36 are positions of shaft-supporting. Further, the convex portion 50 is formed at the corner portion that is formed by the top wall 24 and the side wall 28. Therefore, the rigidity of the convex portion 50 is high. Accordingly, even if lateral force or the like is inputted to the suspension tower 12 from the upper arm 32 via the shaft bodies 42, 44, deformation of the convex portion 50 and of the side wall 28 and the top wall 24 that are formed integrally with the convex portion 50 is suppressed.

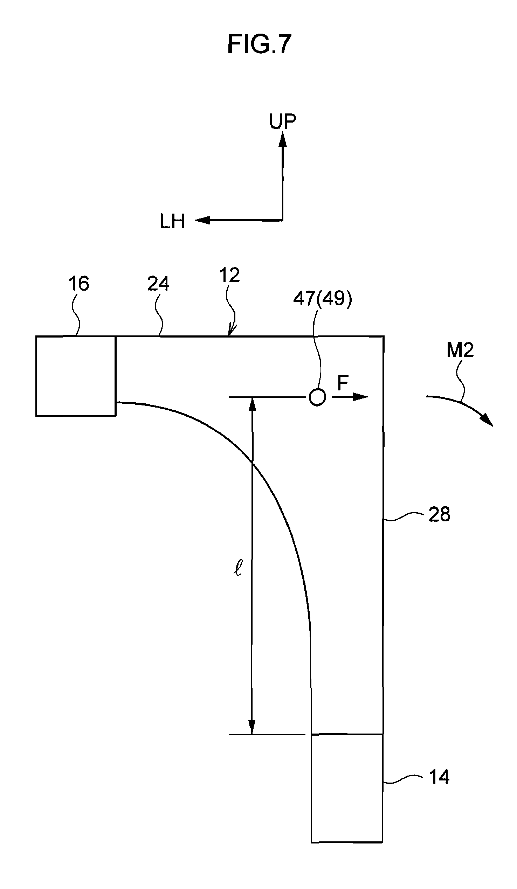

Further, as shown in Fig. 7, due to lateral force F being inputted to the suspension tower 12 from the upper arm 32 via the shaft bodies 42, 44, a rotation moment M2 (Fxl) that is centered around the front side member 14 is applied to the suspension tower 12. Here, as seen in a vehicle front view, the convex portion 50 overlaps with the shaft bodies 42, 44 (upper arm mounting portions) that are input points of the lateral force from the upper arm 32. Therefore, the rotation moment M2 that is applied to the convex portion 50 is suppressed, and deformation of the suspension tower 12 is suppressed more.

Moreover, in a case in which collision load is inputted to the suspension tower 12 from the vehicle longitudinal direction front side, the load, that is inputted from the front wall 26 via the shaft body 42 to the convex portion 50, is transmitted to the top wall 24 and the side wall 28, and is transmitted to the rear wall 30 via the shaft body 44. Namely, collision load that is inputted to the suspension tower 12 is dispersed and is transmitted to the vehicle longitudinal direction rear side.

### [Second Embodiment]

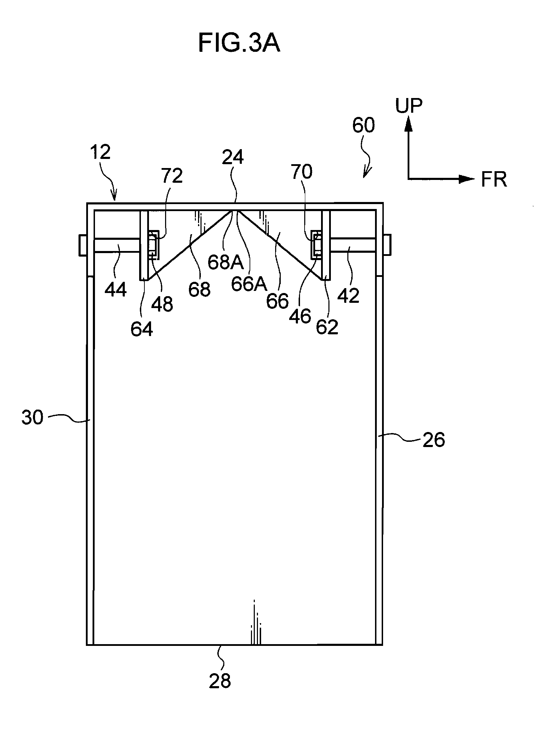

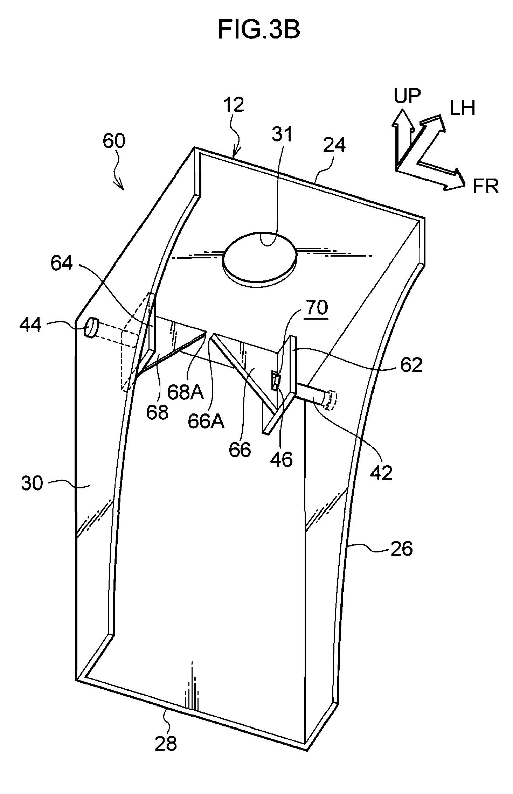

A suspension tower structure relating to a second embodiment of the present invention is described. Structural elements that are similar to those of the first embodiment are denoted by the same reference numerals, and detailed description thereof is omitted. Note that, for convenience of explanation, illustration of the upper arm is omitted from Fig. 3.

Since the point that differs from the first embodiment is found substantially in the structure of the upper arm mounting portions, this portion is described.

As shown in Fig. 3A and Fig. 3B, a suspension tower structure 60 has supporting portions 62, 64 that are rectangular plate shaped and that support ones of ends of the shaft bodies 42, 49 respectively, and reinforcing portions 66, 68 that are shaped as triangular plates as seen in the vehicle transverse direction and are disposed at the vehicle longitudinal direction rear side or front side of the supporting portions 62, 64.

The supporting portions 62, 64 are formed such that, among the four sides that structure the outer circumference of the rectangle shape, two sides that are adjacent abut the top wall 24 and the side wall 28. Note that the supporting portions 62, 64 correspond to portions of the front side upper arm mounting portion and the rear side upper arm mounting portion of the present invention, respectively.

The reinforcing portion 66 is right triangular shape, and is formed such that one of the sides thereof that forms the right angle abuts the surface at the vehicle longitudinal direction rear side of the supporting portion 62, and the other side abuts the top wall 24.

The reinforcing portion 68 is structured substantially similarly so as to be symmetrical with respect to the reinforcing portion 66. Note that vertices 66A, 68A of the reinforcing portions 66, 68 are set apart from one another in the vehicle longitudinal direction. Namely, the reinforcing portion 66 and the reinforcing portion 68 are formed so as to be discontinuous.

Note that the reinforcing portions 66, 68 are formed so as to be aligned to an axis of the shaft bodies 42, 49 in the vehicle transverse direction. Accordingly, recesses 70, 72 that house the weld nuts 46, 48 are formed in the reinforcing portions 66, 68 so as to not interfere with the weld nuts 46, 48 provided at the supporting portions 62, 64.

Note that the supporting portions 62, 64 and the reinforcing portions 66, 68 are formed integrally by casting together with the side wall 28 and the top wall 24 and the like of the suspension tower 12.

In the suspension tower structure 60 that is formed in this way, because the supporting portions 62, 64 are reinforced by the triangular reinforcing portions 66, 68, the rigidity of the supporting portions 62, 64 improves. Accordingly, even if lateral force is inputted from the upper arm 32 via the shaft bodies 42, 44 to the supporting portions 62, 64, deformation of the supporting portions 62, 64, and deformation of the top wall 24 and the side wall 28 of the suspension tower 12 at which the supporting portions 62, 64 are formed, can be suppressed.

Further, as compared with a structure in which the region between the supporting portions 62, 64 is formed by the convex portion 50 that is shaped as a solid beam as in the first embodiment, the region between the supporting portions 62, 64 is formed by the reinforcing portions 66, 68 that are formed from triangular plates, and therefore, lightening of the weight of the suspension tower 12 can be devised. Moreover, because the supporting portions 62, 64 can be reinforced by the reinforcing portions 66, 68 respectively, the supporting portions 62, 64 can be reinforced efficiently.

Still further, in a case in which collision load is inputted to the suspension tower 12 from the vehicle front side, the collision load, that is inputted from the front wall 26 via the shaft body 42 to the supporting portion 62, is dispersed via the reinforcing portion 66 to the top wall 24 and is transmitted toward the vehicle rear. Namely, the collision load that is inputted to the suspension tower 12 is dispersed and is transmitted toward the vehicle longitudinal direction rear side.

### [Third Embodiment]

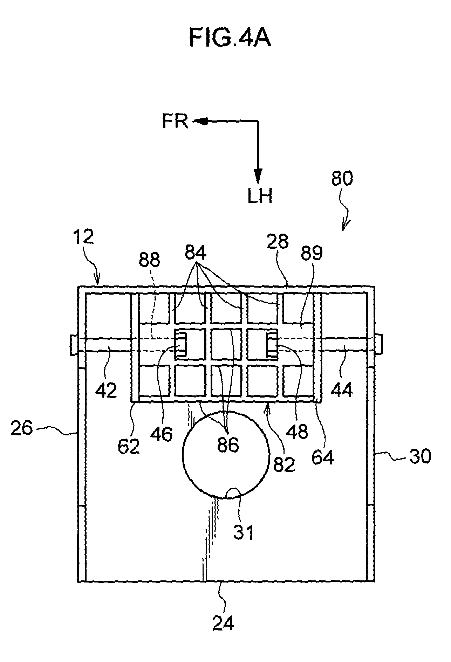

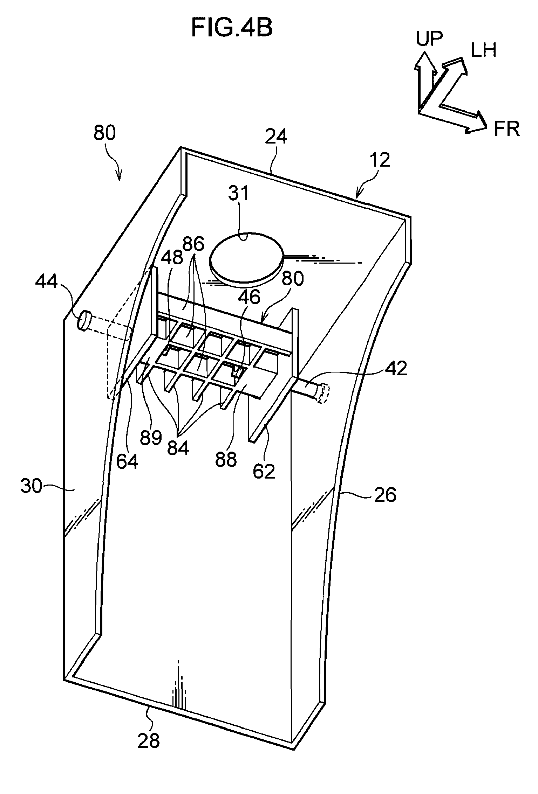

A suspension tower structure relating to a third embodiment of the present invention is described. Structural elements that are similar to those of the first and second embodiment are denoted by the same reference numerals, and detailed description thereof is omitted. Note that, for convenience of explanation, illustration of the upper arm is omitted from Fig. 4A and Fig. 4B.

Since the point that differs from the second embodiment is found substantially in the reinforcing member that a support the supporting portions 62, 64, this portion is described.

As shown in Fig. 4A and Fig. 4B, a reinforcing member 82 of a suspension tower structure 80 is a member that is formed such that four rectangular plate bodies 84, that extend in the vehicle transverse direction, and three rectangular plate bodies 86, that extend in the vehicle longitudinal direction, form a lattice of uniform intervals between the supporting portions 62, 64. Only at the lattice positions where the bolts 42, 44 that are the shaft bodies are inserted-through, solid portions 88, 89 where these lattice portions are made solid are formed.

Note that the supporting portions 62, 64 and the reinforcing member 82 are formed integrally by casting together with the side wall 28 and the top wall 24 and the like of the suspension tower 12. Further, this reinforcing member 82 corresponds to the reinforcing portion of the present invention.

Operation of the suspension tower structure 80 that is structured in this way is described.

The rigidity of the supporting portions 62, 64 improves because the supporting portions 62, 64 are formed integrally via the reinforcing member 82. Accordingly, even if lateral force is inputted from the upper arm 32 via the shaft bodies 42, 49 to the supporting portions 62, 64, the respective supporting portions 62, 64 are supported by the reinforcing member 82, and deformation of the supporting portions 62, 64, and deformation of the top wall 24 and the side wall 28 at which the supporting portions 62, 64 are formed, can be suppressed.

Further, as compared with a structure in which the region between the supporting portions 62, 64 is formed by the convex portion 50 that is shaped as a solid beam as in the first embodiment, the reinforcing member 82 is formed by the plate bodies 84, 86 that are disposed in the form of a lattice, and therefore, lightening of the weight of the suspension tower 12 can be devised.

Moreover, in a case in which collision load is inputted to the suspension tower 12 from the vehicle front side, the collision load, that is inputted from the front wall 26 via the shaft body 42 and the supporting portion 62 to the reinforcing member 82, is dispersed to the side wall 28 via the plate bodies 84, and is dispersed to the rear wall 30 via the plate bodies 86, the supporting portion 64 and the shaft body 44. Namely, the collision load that is inputted to the suspension tower 12 is dispersed and is transmitted toward the vehicle longitudinal direction rear side.

### [Fourth Embodiment]

A suspension tower structure relating to a fourth embodiment of the present invention is described. Structural elements that are similar to those of the first embodiment are denoted by the same reference numerals, and detailed description thereof is omitted.

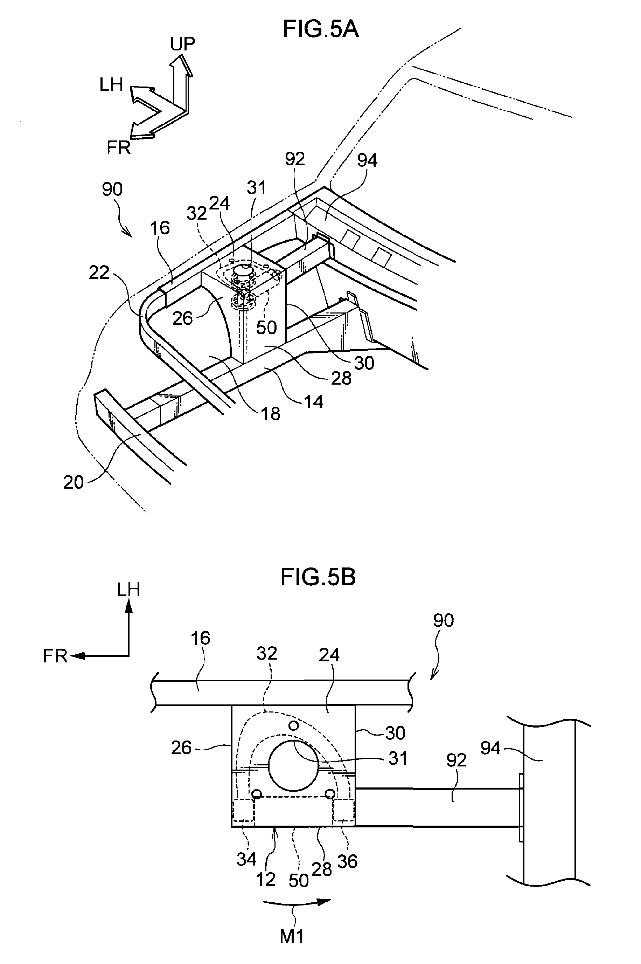

Because the point that differs from the first embodiment is found substantially in a reinforcing member 92 that is provided at the rear wall 30 of the suspension tower 12 as shown in Fig. 5A, this portion is described.

As shown in Fig. 5A, the reinforcing member 92 of a suspension tower structure 90 is a member that is disposed between the rear wall 30 of the suspension tower 12 and a cowl 94 that is a skeleton member. The reinforcing member 92 is, in cross-section, shaped as a hat that opens toward the vehicle vertical direction lower side. A front side end portion in the vehicle longitudinal direction of the reinforcing member 92 is joined to the rear wall 30, and the rear side end portion is joined to the cowl 94. Further, the reinforcing member 92 is joined to the rear wall 30 at a position corresponding to the position of the shaft body 44.

Operation of the suspension tower structure 90 that is structured in this way is described.

As shown in Fig. 5B, in a case in which different lateral forces are inputted from the both end portions of the upper arm 32 via the first shaft body 42 and the second shaft body 44, there are cases in which rotation moment M1 is applied to the suspension tower 12 as seen in plan view Even if this rotation moment M1 is applied to the suspension tower 12, the suspension tower 12 is supported by the reinforcing member 92 and the rigidity of the suspension tower 12 is improved, and therefore, collapsing rearward of the suspension tower 12 can be suppressed.

Further, as shown in Fig. 7, in a case in which lateral force is inputted to the suspension tower 12 from the upper arm 32 via the shaft bodies 42, 44, the rotation moment M2 (Fxl) that is centered around the front side member 14 is applied to the suspension tower 12 as seen in a vehicle front view. However, because the reinforcing member 92 is disposed on the same axis as the shaft body 44 at the vehicle longitudinal direction rear side of the rear wall 30, deformation of the suspension tower 12 due to the rotation moment M2 is suppressed.

Moreover, in a case in which collision load is inputted to the suspension tower 12 from the vehicle front side, the load, that is inputted from the front wall 26 via the shaft body 42 to the convex portion 50, is transmitted to the top wall 24 and the side wall 28, and is transmitted to the rear wall 30 via the shaft body 44. Moreover, collision load is transmitted from the rear wall 30 via the reinforcing member 92 to the cowl 94 as well. Namely, collision load that is inputted to the suspension tower 12 is dispersed and is transmitted to the vehicle longitudinal direction rear side.

### [Fifth Embodiment]

A suspension tower structure relating to a fifth embodiment of the present invention is described. Structural elements that are similar to those of the first embodiment are denoted by the same reference numerals, and detailed description thereof is omitted.

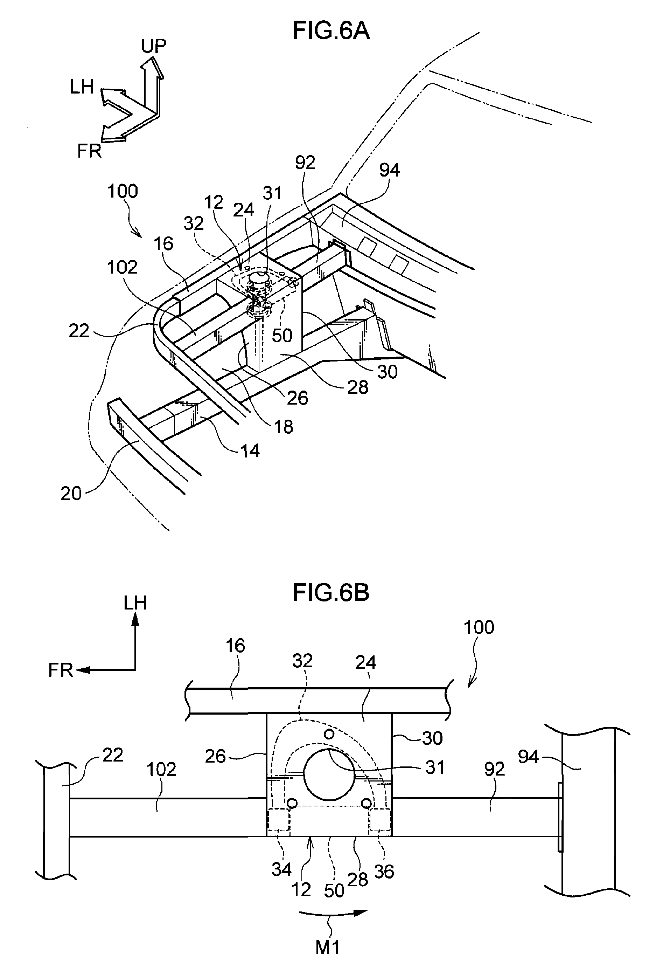

Since the point that differs from the fourth embodiment is found substantially in a reinforcing member 102 that is provided at the front wall 26 of the suspension tower 12 as shown in Fig. 6A, this portion is described.

As shown in Fig. 6A, the reinforcing member 102 is disposed between the radiator support upper member 22 and the front wall 26 of the suspension tower 12. The reinforcing member 102 is, in cross-section, shaped as a hat that opens toward the vehicle lower side. A front side end portion in the vehicle longitudinal direction of the reinforcing member 102 is joined to the radiator support upper member 22, and the rear side end portion of the reinforcing member 102 is joined to the front wall 26. Further, the reinforcing member 102 is joined to the front wall 26 at a position corresponding to the position of the shaft bodies 42, 49 as seen in a vehicle front view.

Operation of a suspension tower structure 100 that is structured in this way is described.

As shown in Fig. 6B, in a case in which different lateral forces are inputted to the suspension tower 12 from the both end portions of the upper arm 32, there are cases in which the rotation moment M1 is applied to the suspension tower 12 as seen in plan view. At the suspension tower structure 100, because the suspension tower 12 is supported by the reinforcing member 92 that is connected to the cowl 94 and by the reinforcing member 102 that is connected to the radiator support upper member 22, the rigidity of the suspension tower 12 improves more. Accordingly, even if the rotation moment M1 is applied to the suspension tower 12, the suspension tower 12 collapsing in the vehicle longitudinal direction is suppressed.

Further, due to lateral force being inputted from the upper arm 32 to the suspension tower 12, the rotation moment M2 that is centered around the front side member 14 is applied to the suspension tower 12 as seen in a vehicle front view. However, because the reinforcing members 92, 102 are disposed on the same axis as the shaft bodies 42, 49, deformation of the suspension tower 12 due to the rotation moment M2 is suppressed more.

Moreover, in a case in which collision load is inputted to the radiator support upper member 22 from the vehicle front side, collision load is transmitted via the reinforcing member 102 to the suspension tower 12. The collision load, that is inputted from the front wall 26 of the suspension tower 12 via the shaft body 42 to the convex portion 50, is transmitted to the top wall 24 and the side wall 28, and is transmitted via the shaft body 44 to the rear wall 30. Moreover, collision load is transmitted from the rear wall 30 via the reinforcing member 92 to the cowl 94 as well. Namely, collision load that is inputted to the suspension tower 12 is dispersed and is transmitted to the vehicle longitudinal direction rear side.

Note that, in the series of embodiments, the convex portion 50, the supporting portions 62, 64, the reinforcing portions 66, 68, and the reinforcing member 82 are formed integrally with the suspension tower 12 by casting, and therefore, there is the advantage that the manufacturing process can be simplified. However, the convex portion 50, the supporting portions 62, 64, the reinforcing portions 66, 68, and the reinforcing member 82 may be formed as bodies separate from the suspension tower 12.

Further, the convex portion 50, the reinforcing portions 66, 68, and the reinforcing member 82 overlap the shaft bodies 42, 49 as seen in a vehicle front view. However, it suffices for the convex portion 50, the reinforcing portions 66, 68, and the reinforcing member 82 to overlap upper arm mounting portions.

Moreover, although the reinforcing members 92, 102 are provided at the vehicle longitudinal direction both sides of the suspension tower 12 in the fifth embodiment, there may be a structure in which only the reinforcing member 102 is provided at the vehicle longitudinal direction front side.

Still further, the fourth and fifth embodiments describe cases in which the convex portion 50 is formed within the suspension tower 12. However, instead, structures corresponding to those of the second or third embodiment may be formed within the suspension tower 12.

## Claims

1. A suspension tower structure comprising:
a suspension tower main body that is provided at an outer side in a vehicle transverse direction of a vehicle front portion;
a front side upper arm mounting portion that is a portion of the suspension tower main body, and to which is mounted a front side end portion in a vehicle longitudinal direction of an upper arm that structures a portion of a suspension;
a rear side upper arm mounting portion that is a portion of the suspension tower main body, and to which is mounted a rear side end portion in the vehicle longitudinal direction of the upper arm; and
a reinforcing portion that, within the suspension tower main body, overlaps at least one of the front side upper arm mounting portion or the rear side upper arm mounting portion as seen in a vehicle front view, and that is provided between the front side upper arm mounting portion and the rear side upper arm mounting portion.

2. The suspension tower structure of claim 1, wherein the reinforcing portion is formed integrally with the suspension tower main body.

3. The suspension tower structure of claim 1 or 2, wherein the reinforcing portion is formed from a front side reinforcing portion that reinforces the front side upper arm mounting portion, and a rear side reinforcing portion that reinforces the rear side upper arm mounting portion.

4. The suspension tower structure of any one of claims 1 through 3, wherein the reinforcing portion is formed by a plate body.

5. The suspension tower structure of claim 2, wherein the reinforcing portion is a beam-shaped body that is formed integrally and continuously from the front side upper arm mounting portion to the rear side upper arm mounting portion.

6. The suspension tower structure of any one of claims 1 through 5, further comprises a first reinforcing member that connects a rear wall of the suspension tower main body with a skeleton member that is positioned further toward a vehicle longitudinal direction rear side from the suspension tower main body.

7. The suspension tower structure of any one of claims 1 through 6, further comprises a second reinforcing member that connects the front wall of the suspension tower main body with a skeleton member that is positioned further toward a vehicle longitudinal direction front side from the suspension tower main body.

8. The suspension tower structure of any one of claims 1 through 5, wherein the suspension tower main body has a top wall, a front wall that is positioned at front side in the vehicle longitudinal direction, a side wall that is positioned at inner side in the vehicle transverse direction, and a rear wall that is positioned at rear side in the vehicle longitudinal direction, and a part of the reinforcing portion contacts the side wall and the top wall of the suspension tower main body.
